(19) Europäisches Patentamt
European Patent Office
Office européen des brevets

(11) Publication number : **0 572 281 A1**

(12) **EUROPEAN PATENT APPLICATION**

(21) Application number : **93304197.2**

(22) Date of filing : **28.05.93**

(51) Int. Cl.$^5$ : **G06F 15/30**

(30) Priority : **29.05.92 US 890183**

(43) Date of publication of application :
**01.12.93 Bulletin 93/48**

(84) Designated Contracting States :
**AT BE CH DE DK ES FR GB GR IE IT LI LU MC NL PT SE**

(71) Applicant : **THE DREYFUS CORPORATION**
**200 Park Avenue**
**New York, New York 10166 (US)**

(72) Inventor : **Frenkel, Robert I.**
**38 Turner Drive**
**Chappaqua, N.Y. 10514 (US)**
Inventor : **Hoey, Richard**
**294 Chestnut Hill Road**
**Wilton, CT 06897 (US)**
Inventor : **Peterman, Alan**
**Barnegat Road**
**Pound Ridge, NY 10576 (US)**

(74) Representative : **Crawford, Andrew Birkby et al**
**A.A. THORNTON & CO. Northumberland House 303-306 High Holborn**
**London WC1V 7LE (GB)**

# (54) Data processing system for administering a program to allocate financial assets.

(57) A data processing system and method allocates financial assets among a plurality of investments in response to questionnaire data indicating an investor's financial needs, goals and risk tolerance. After a suitable allocation has been made, a reporting letter is prepared to advise the investor of recommended types of investments.

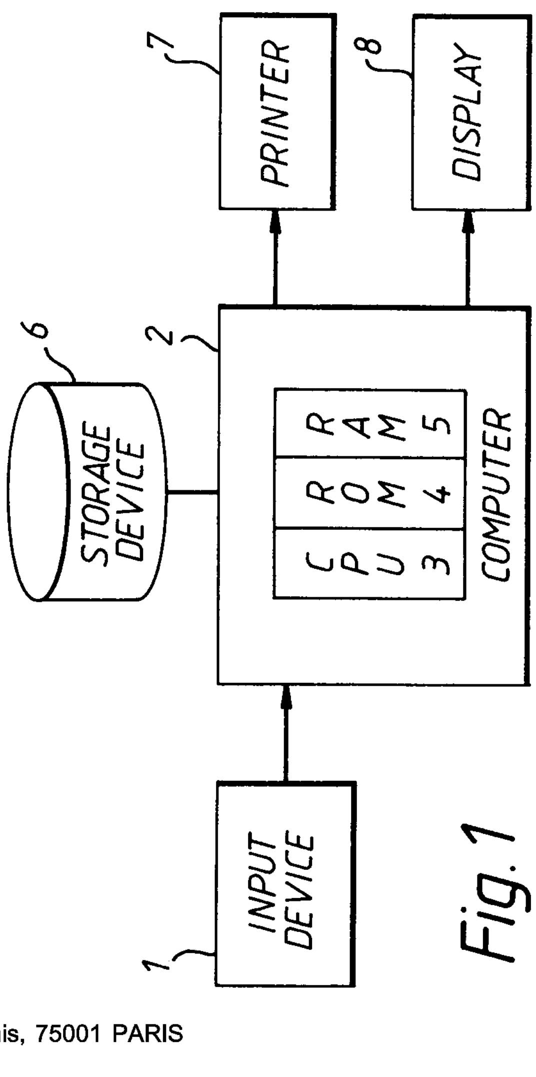

Fig. 1

EP 0 572 281 A1

Jouve, 18, rue Saint-Denis, 75001 PARIS

## BACKGROUND OF THE INVENTION

Wealthy people have had investment advisers and other professionals to assist them in managing their assets, and have relied on them for information and advice as to how and where to invest in order to achieve their financial goals. These professionals not only have access to specialized information about different types of investments with their respective risks and advantages, but also have training in how to evaluate an investor's particular financial circumstances and how to best tailor an investment strategy to meet individual financial needs. The professional would assist an investor by determining a well-structured asset allocation strategy, in which the investor's financial assets are allocated among a variety of different possible investments, such as stocks, bonds, mutual funds of various types, etc. However, it can require a significant amount of time to gather information and evaluate it in order to recommend such an allocation.

Those professionals having a proven record of success are, of course, highly sought after, and the average investor is generally unable to obtain or afford the personal attention of a successful professional manager. Thus, it has previously been difficult for the average investor to obtain the type of personalized investment counseling from a top professional that he might desire.

With the advent of computer-based financial management services, it has become possible to input information as to an individual investor's financial position and to run an asset allocation program. However, when dealing with large numbers of individual investors, it becomes cumbersome and prohibitively expensive to gather and process lengthy and highly detailed financial information. In other words, if many average investors wish to obtain computer-based investment advice, the program must be designed such that it is available at a reasonable price to the individuals. The amount of information must be limited, and hence the choice of what questions to ask is important. In addition the type of questions must be comprehensible to a unsophisticated or inexperienced investor who may be unfamiliar with different types of investments, not to mention the details of any investments he may already hold.

Therefore, it is essential that the information obtained from the individual investor be carefully selected to most appropriately categorize his financial position and goals, and that the program to evaluate this information be designed to maximize the use of this information and to provide the individual investor with a suitable and realistic recommendation for allocation of his assets.

## OBJECTS AND SUMMARY OF THE INVENTION

Accordingly, it is an object of the present invention to provide a computer-based asset allocation service that avoids the above-described disadvantages of the prior art.

It is a further object of the present invention to provide a computer-based asset allocation system that optimizes the type of information required from an individual investor and processed by the system.

It is a further object of the present invention to provide a data processing system for administering a program to allocate financial assets in response to the optimized information from the individual investor.

It is yet a further object of the present invention to provide a data processing system for administering a program to allocate financial assets that is suitable for the investor's present needs and future financial goals.

In accordance with one aspect of the present invention, a data processing system for administering a program to allocate financial assets by determining a division of the assets among a plurality of instruments comprises first memory means for storing investment data defining a plurality of investments, second memory means for storing category data defining a plurality of investment categories, each investment category corresponding to at least one of the investments, input means for inputting questionnaire data including an investor's financial assets data, financial goal data and risk tolerance data (primarily in regard to an ability to bear risk of loss of investment principal), allocation means for allocating the financial assets to a suitable one of the investment categories in dependence on the questionnaire data, and output means for outputting a report including the suitable investment category and the at least one investment corresponding thereto.

These and other objects, aspects and features of the present invention will be understood from the following detailed description of a preferred embodiment thereof, taken in combination with the following drawings.

## BRIEF DESCRIPTION OF THE DRAWINGS

Fig. 1 is a block diagram of a data processing system in accordance with the present invention;

Fig. 2 is a flowchart of an overall data processing method in accordance with a preferred embodiment of the present invention;

Fig. 3 is a detailed flowchart of a first portion of the flowchart of Fig. 2; and

Figs. 4A-4F are, in combination, a detailed flowchart of a second portion of the flowchart of Fig. 2.

## DETAILED DESCRIPTION OF THE PREFERRED EMBODIMENT

A summary of the basic method underlying the system is as follows. Investors (and potential investors) must complete all of the questions in the allocation questionnaire. The questionnaire generally measures an investor's current financial situation, financial needs and goals, and risk tolerance. The data is input and is then processed by a computer program, and the allocation recommendation is generated directly from the program. A preferred embodiment of the questionnaire is attached at the end of the present specification.

The program gives various weights to each of the answers provided by an investor, and in combination with certain other evatuations, produces the allocation recommendation. There is no further human evaluation of the data unless the program itself defaults in the analysis because of an improperly completed questionnaire or if the investor himself indicates that human evaluation is required (see Question 19).

The recommendation is provided to the investor in a lengthy response letter which explains the rationale underlying the recommendation, and suggests specific relevant mutual funds for investment based on the allocation. The recommendation consists of percentage ranges in which the investor should be invested in equity, income, and money market investments. A document summarizing the investor's answers provided on the questionnaire will accompany the response letter. The investor will be asked to review the document to insure that his recommendation is based on accurate information.

The preferred embodiment of the system in accordance with the present invention uses the questionnaire information to assign the investor to one of 17 categories in dependence on his financial status, goals and risk tolerance. These categories and the allocation recommendations may be summarized as follows:

### Categories

1. Maximum Safety and Stability (all in high grade short-term investments)
2. Maximum Stability (all in money market investments)
3. Stability (most in money market investments, some in bond funds)
4. Stability and Income (low risk) (portion in money market investments, a portion in bond funds)
5. Income (low risk) (most in bonds or bond funds, a portion in money market investments)
6. Stability (most in money market investments, some in bond or other income investments)
7. Stability and Income (small amount in equity growth assets, a portion in money market investments, a portion in bond or other income investments)
8. Income (small amount in equity or growth assets, a portion in bond funds and other income investments, smaller allocation to money market investments)
9. Stability and Secondary Goal of Growth (moderate in equities with extended period investment, the rest with higher allocation to money market funds and smaller allocation to bond funds or other income investments)
10. Balance Among Stability, Income and Growth (moderate in equities with extended period investment, a portion in money market funds, a portion in bond funds or other income investments)
11. Income and Secondary Goal of Growth (moderate in equities with extended period investment, allocation to bond funds or other income investments, a portion in money market funds)
12. Income, Stability and Growth (low risk) (portion in growth as strategic investment, a portion in income investments, a portion in money markets)
13. Income and Growth (low-medium risk) (portion in growth as strategic investment, portion in income investments, a smaller portion in money markets)
14. Growth and Secondary Goals of Income and Stability (a smaller portion in growth as strategic investment, a portion in income investments, a smaller portion in money markets)
15. Growth and Income (a portion in growth as strategic investment, a portion in income investments, a smaller portion in money markets)
16. Growth (higher allocation to equity investments with smaller allocations to income and money market instruments)
17. Growth (higher allocation to equity investments with opportunity, money market instruments as cash reserve)

It will be seen that the categories described above correspond to a continuum of allocation proposals based upon the investors ability and willingness to accept risk in order to achieve his goals, and the lines dividing the categories can vary in dependence on changing economic conditions. It will also be apparent that the particular investments recommended for investment within the growth, income and money market areas will vary as they become available, but that the riskier/higher return investments will be increased as the category increases.

The logic structure underlying the asset allocation system is a follows. First, an investor's "dedicated reserve" is established. The "dedicated reserve" feature of the system generally refers to the amount of money an investor will need to make certain specific large purchases within the next 10 years including, for example, buying a home or paying college tuition. Question 16 of the questionnaire is designed specifically to elicit information on the investor's shorter-term financial requirements. Once determined, the investor is advised that most or all of this amount should be invested in money markets for safety and liquidity purposes. The "dedicated reserve" as used herein is unique to the system and is not believed to be an industry-wide concept.

The dedicated reserve determination is made as follows. If the investor states that such money would be needed within 5 years, for example, 100% of this amount would constitute the dedicated reserve. However, if this money is needed in 5-10 years, the dedicated reserve would be set at 80-100% of this amount as determined by the program based on certain other factors. So, an investor who says in the questionnaire that he will need to use $20,000 in 3 years for a particular purpose will be advised that this $20,000 should remain liquid and be invested in money markets, and this amount will constitute the investor's dedicated reserve. Note that an investor who indicates that he has no large, shorter-term expenses upcoming will not have a dedicated reserve. After setting the dedicated reserve, the allocation recommendation is made among equity, bond/income, and money investments, and is to be applied by the investor to his remaining assets available for investment.

Secondly, after the investor's dedicated reserve is set, the "equity module" is employed. It determines what portion of an investor's remaining assets available for investment should be invested in equities. The decision is largely a function of an investor's risk tolerance as stated in the questionnaire. Also, the investor's long-term financial needs are considered. For example, the system might suggest that 30-50% of the investor's money should be in equities.

Thirdly, after the equity model is executed, the "fixed-income module" allocates the investors remaining investment dollars. This decision involves an allocation between bond/income investments and money market investments, and is a function of the extent of the investor's need for income coupled with the investor's risk tolerance. Generally, the greater the need for income and the higher the risk tolerance expressed, the greater the allocation to bond/income investments. The fixed income model, for example, might suggest 20-40% be invested in bond/income funds and 20-40% in money markets. It is important to remember, though, that the dedicated reserve will be added into the money market allocation and will result in a percentage range for money markets which is higher than 20-40% based on the overall assets available for investment. Consequently, this would proportionately reduce the overall allocation percentages for equity and income investments.

The system provides for a plurality of investment options or basic allocation "buckets"; however, the use of the dedicated reserve feature can result in an infinite number of possibilities. To conclude this example, the following allocation recommendation might be offered in a full response letter:

a. The $20,000 needed within 2-5 years should be invested in money markets to insure liquidity and the ability to meet this short-term obligation and, therefore;

b. Total Assets available for investment should be allocated as follows:

| | | |
|---|---|---|
| Equity (Growth) | - | 24-40% |
| Income | - | 16-32% |
| Money Market (including the dedicated reserve) | - | 36-52% |

Before specific mutual funds are recommended for investment within the specific categories (many, but not necessarily all, of the mutual funds may be recommended), an investor's tax situation is considered and the investors entire fixed income allocation is made subject to a taxable/tax exempt calculation. (See Question 8 of the questionnaire). Based thereon, the investor is advised if a taxable or tax-exempt investment is most appropriate for all or some of his assets earmarked for a fixed income investment. The recommendation is a function of the investor's federal tax bracket, or combined federal and state tax bracket, the investor's state of residence (i.e. whether there is a double tax-free fund for those state residents) and, in certain limited circumstances, the investor's city of residence.

Ultimately, the specific mutual funds are recommended to the investor in accordance with the recommended percentages and tax calculation and in consideration of the degree of risk tolerance expressed by the investor in the questionnaire.

Figure 1 is a block diagram of a data processing system in accordance with a preferred embodiment of the present invention. The system includes an input device 1 by which answers from the questionnaire are input. Input device 1 is advantageously embodied in a keyboard device, scanner or the like. The data input through input device 1 is fed to a digital computer 2, which may be a mainframe computer, personal computer or the like, that administers the program to allocate the financial assets described in the questionnaire. Computer 2 includes a central processing unit (CPU) 3 that performs data processing on the input data in accordance with control programs, including the allocation program. Read-only-memory (ROM) 4 and random-access-memory (RAM) 5 provide storage and work space for CPU 3, and in particular the allocation program can be loaded and executed in RAM 5. An external storage device 6, such as a floppy disk, drum etc., stores data on the available allocation buckets, e.g., data defining the specific funds available for investment, which data is retrieved into RAM 5 when necessary.

When the data from the questionnaire has been processed by CPU 3 to produce either a successful allocation of assets or to produce any of a variety of error messages and intermediate results, the successful allocation result or the error results are output through a printer 7 and/or a display 8, which may be, for example, a CRT. As described above, the results of a successful allocation are presented in a form of a letter giving a detailed report to the individual investor and include a recommendation of asset allocation among the various buckets.

It will be understood, of course, that the system may include a plurality of input devices 1, storage 6, printers 7 and displays 8, so that the data may be input and the results output at a plurality of locations. Input device 1, computer 2, storage 6, printer 7 and display 8 may also form part of a larger local area network or wide area network to improve access to the system.

The system of Figure 1 is designed to store in RAM 5 the advantageous allocation program in accordance with the present invention. A flowchart of the overall allocation program is illustrated in Figure 2. The program starts at step S1, in which computer 2 receives the answers to a questionnaire. It will be understood that the answers to a plurality of questionnaires can be input together, with each questionnaire being processed in sequence. In step S2, the program checks to determine whether the questionnaire is valid or falls into one of a number of predetermined exceptions requiring individual consideration. If the questionnaire fits into one of these exceptions, the program moves to step S3 to terminate processing as to that questionnaire, which may include issuing a preliminary report as to the nature of the exception. Thereafter, the program may return to step S1 to process another questionnaire, if present.

However, if the questionnaire is determined to be valid, the program moves from step S2 to step S4 and then to step S5 in which the dedicated reserve is calculated, and then in step S6 the remainder for investment is calculated. Thereafter, the program moves to step S7 to compute additional scores or weights to be accorded various ones of the answers to the questionnaira to properly reflect the interdependence of the answers upon each other in determining asset allocation. The program in accordance with the present invention provides this advantage by assigning an Income Score and a Equity Score in dependence upon the questionnaire information, and then adding weights in the form of points to the Income and Equity scores. After the weights are computed and added to the Income and Equity scores in step S5, then steps S8, S9 and S10 in sequence determine the equity bucket, the fixed income bucket and the taxable/tax free bucket. As explained above, it is advantageous to determine the buckets in this order so that both short term liquidity needs and long term financial goals can be accommodated. Finally, in step S11, the program prepares a report, which is then displayed on display 8 and/or printed at printer 7. Advantageously, the report is in the form of a letter to the individual investor, giving specific dedicated reserve and allocation recommendations, together with an explanation of the significance of these recommendations.

Figure 3 is a more detailed flowchart of steps S2-S4 of Figure 2. As shown therein, there are various exceptions which will require either additional information or clarification from the investor, or which will require individual consideration dependent on his particular situation. Thus, if the questionnaire includes incomplete questions in step S12, multiple answers in step S13, unsolicited responses in step S14, or is determined to be an incorrect questionnaire in step S15, additional information is required from the investor. On the other hand, if the investor identifies himself as not being a U.S. resident in step S16 or as not being an individual in step S17, this information will require individual attention. Therefore, if any one of these exceptions is determined, the program moves to step S3 to place the questionnaire in the exception pool. However, if no exception exists, the program moves to step S4.

Figures 4A-4F illustrate the rest of the overall control program of Figure 2 from step S5 through step S10 for a 1992 example. As used in the following discussion, the symbol "Q#" will identify the answer to the question having the corresponding number in the questionnaire. The major steps are broken down in more detail as follows.

To begin the allocation, first the initial values for the Income and Equity scores are totalled in hundreds or less in step S18 (Figure 4A) from points assigned to the questionnaire answers. The program then moves to step S19 to compute the dedicated reserve, if any. That is, in dependence upon the investor's liquidity needs and plans, a dedicated reserve may be set aside. This computation is performed in steps S20-S23. Thus, first R is computed in step S20 as:

R = (TOTAL Non - IRA ASSETS (Q17 1 - 8)) - (Q16A + QQ16B + (0.80)Q16C)

The program then checks in step S21 if R/((0.20)Q16(C))≧5. If the answer is yes, then in step 522 the dedicated reserve is:

Dedicated Reserve = Q16A+Q16B+(0.80)Q16C.

On the other hand, if in step S21 the answer is no then in step S23 the dedicated reserve is:

Dedicated Reserve = Q16A+Q16B+Q16C.

In step S24 the remainder is computed, which is simply TOTAL Non-IRA ASSETS - Dedicated Reserve.

The program then begins in step S25 the computation of the weights to be assigned to the Income and Equity scores, which weights are determined by additional scores added to or subtracted from the Income and Equity scores. The procedure is as follows. In step S26 (Figure 4B) the value of X is computed as:

X = ((TOTAL Non - IRA ASSETS) - (Dedicated Reserve) /((Lesser of 1991 and 1992 Income) + Non - Taxable Income)

where TOTAL Non-IRA ASSETS is the sum of Q17(1)-Q17(8). It will be understood that the incomes are for the current year and the previous year, and the questionnaire will be appropriately modified each year.

In steps S27-S36, the value of X is checked and then different weights are added to Income and Equity in dependence upon the value of X. Thus, if X is under 0.25 (step S28), 35 points are added to Income and 15 points to Equity (steps S29 and S30). If X is between 0.26 and 0.50 (step S31), 20 points are added to Income and 7 points to Equity (steps S32 and S33). If X is between 0.51 and 1.0 (step S34), 5 points are added to Income and no points to Equity (step S35), while if X is greater than 1.0 (step 536), no points are added to either Income or Equity. In all four cases, the program then moves to step 537, wherein the value of Y (Stated Income) is computed as:

Y = (Lesser of 1991 and 1992 Income) + Non - taxable Income

The program then begins in step S38 to add points to the Equity Score in dependence upon Y and the answers to Questions 11 and 17. Specifically, step S38 implements the following table for calculating the added points: If Y is under $20,000,

Q17 lines 1-8 Retirement and Non-retirement

| Q11 | $0 - $50M | $50,001 - $100M | over $100M |
|---|---|---|---|
| 1 | 100 | 100 | 100 |
| 2 | 100 | 100 | 100 |
| 3 | 100 | 100 | 100 |
| 4 | 60 | 40 | 40 |
| 5 | 60 | 30 | 25 |
| 6 | 60 | 25 | 15 |
| 7 | 60 | 20 | 10 |

If Y is $20,000 - $25,000,

Q17 lines 1-8 Retirement and Non-retirement

| Q11 | $0 - $50M | $50,001 - $100M | over $100M |
|---|---|---|---|
| 1 | 100 | 100 | 100 |
| 2 | 30 | 20 | 20 |
| 3 | 20 | 0 | 0 |
| 4 | 5 | 0 | 0 |
| 5 | 0 | 0 | 0 |
| 6 | 0 | 0 | 0 |
| 7 | 0 | 0 | 0 |

If Y is $25,001 - $30,000,

Q17 lines 1-9 Retirement and Non-retirement

| Q11 | $0 - $50M | $50,001 - $100M | over $100M |
|---|---|---|---|
| 1 | 100 | 100 | 100 |
| 2 | 25 | 15 | 15 |
| 3 | 10 | 0 | 0 |
| 4 | 0 | 0 | 0 |
| 5 | 0 | 0 | 0 |
| 6 | 0 | 0 | 0 |
| 7 | 0 | 0 | 0 |

Step S39 (Figure 4C) checks to see whether a dedicated reserve exists, and if so its value is added to a default money market bucket in step S40. The program then moves to step S41 to determine if the investor has total assets minus the dedicated reserve less than $10,000. If so, the program forces the investor in category 2 in step 542, adds 300 points to each of the Income and Equity scores in steps S43 and S44, and then the program moves to step S45 to determine whether the total assets are greater than $50,000. If so, at step S46 (Figure 4D) the program determines whether the assets are greater than $1,000,000 dollars.

If the answer in step S46 is yes, then in step 547 it is checked whether the TOTAL Non-IRA ASSETS are greater than $300,000. If the answer in step S47 is yes, then 40 points are subtracted from the Income score in step S48 and 30 points subtracted from the Equity score in step S49. If the answer in step S46 is no, then in step S50 the program checks if the TOTAL Non-IRA ASSETS are greater than $200,000. If the answer is yes, 20 points are subtracted from the Income score in step S51 and 15 points are subtracted from the Equity score in step S52. This completes the weighting of the Income and Equity scores, and the program then moves in all cases to step S53.

Step S53 determines the equity bucket by the total equity score. As noted above, it is advantageous to determine the equity bucket before the others, in part because of the increased risk in equity investments. In accordance with the preferred embodiments, the system provides 6 equity buckets in dependence on the Equity score with dividing or break points at 220, 125, 85, 45 and 33. Within each bucket, the equity allocation will be made, for example at 0%, 0-10%, 10-30%, 30-60%, 60-70% and 60-80%. It will be understood, of course, that the specific break points and equity allocations are dependent on prevailing economic and market conditions and may vary from year to year or even more frequently.

In step S54 (Figure 4E), the equity buckets are further broken down into the 17 categories (allocation buckets) in response to both the Income score and equity bucket. Thus, in the first bucket #1, the break points in Income score to identify categories 1-5 are 999, 250, 170 and 110, in bucket #2 the break points for categories 6-8 are 195 and 130, in bucket #3 the break points for categories 9-11 are 110 and 85, in bucket #4 the break point for categories 12 and 13 is 95, in bucket #5 the break point for categories 14 and 15 is 82, and in bucket #6 the break point for categories 16 and 17 is 70. As described above in connection with categories 1-17 of the preferred embodiment, the determination of the category will, to a large extent, determine which type of investments are to be recommended and the nature of the particular investments within each type, that is, the amount of risk permitted in the investment.

The remaining steps S55-S69 relate to the calculation of specific percentages for recommendation and specific funds that the service has available at the particular time. While these determinations may be useful to the investor in providing specific, identifiable proposals, they are of secondary consideration as compared with the determination of the equity and allocation buckets in steps S53 and S54, which generally identifies the type of investments recommended for the particular investor as well as the general proportions of those recommended types of investments.

Thus, in step S55 the percentage allocation for money market or bond/income funds is determined. Step S56 checks to see whether a dedicated reserve is required, and if so, in step S57, this amount in default money market dollars is added back in and the allocation percentages are adjusted to reflect this in step S58. Thereafter, or if there is no dedicated reserve in step 556, the program moves to step S59 (Figure 4F) to make specific fund recommendations by category. Thus, to determine the money market and bond recommendation, the program moves to step S60 and in step S61 determines whether tax exempt investments would be of use, relying on the answer to Question 10. If the answer in step S61 is no, default taxable funds are obtained in step S62. If the answer is yes, default tax exempt funds are obtained in step S63 and alternative taxable funds are obtainable in step S64. As explained above, the specific recommendations on funds will depend upon which investments are available at any particular time. In both cases, a successful allocation here of money market and bond investments is indicated at step S65.

On the other hand, to recommend specific funds in the growth area, the program moves from step S59 to step S66 and in step S67 determines whether the investor has been assigned any of categories 14-17. This occurs, as indicated, when the investor has indicated that growth is important and that he is able to tolerate medium to high risk. If the answer in step S67 is no, so that the investor is not in this higher risk category, one default fund is chosen in step S68. On the other hand, if the investor can tolerate more risk, the program moves from step S67 to step S69, wherein three funds of varying and greater risks may be recommended. Again, the program then moves to step S65 to indicate a successful allocation. It will be understood, of course, that if the investor is placed in a category encompassing both money market and bond investments and growth investments, the recommendation steps for both types of investments will be followed.

When the allocation is complete, the system prepares a report, advantageously in the form of a letter to the investor. This letter will include not only a discussion of the allocation bucket or category in which the investor has been placed, together with a recommendation of overall percentages and specific investments, but also an explanation of how the investor's risk tolerance indicated by the answers to the questionnaire has been treated. Thus, the letter will advantageously identify the investor as one who can or should take a certain amount of risk or who can or should look for stability, income or growth in different proportions.

For the reasons discussed above, the following three aspects of the system according to the present invention are particularly advantageous.

1. <u>The Asset Allocation Model</u>. The logic structure in first setting the dedicated reserve, and then executing, in order, the equity module, the fixed income module, and the taxable/tax-free module is an advantageous method for evaluating the data obtained and producing an asset allocation recommendation. Particularly, advantageous is the treatment of an investor's short-term financial needs through the dedicated reserve feature. When the data obtained is incorporated in the model, a sound, reasonably prudent allocation recommendation is produced.

2. <u>The Questionnaire</u>. The profile questions contained in the questionnaire provide a better way of surfacing an investor's actual tolerance for risk with regard to his investments. Existing prior art is much less sophisticated in both this regard and in offering very specific, tailored, allocation recommendations. The questionnaire generates the kind of precise data needed to produce the most appropriate recommendation for each investor. The nuances of the profile questions and the weight afforded them are a significant aspect of the system.

3. <u>Suitability</u>. The rules of the National Association of Securities Dealers, Inc. (the "NASD") require that investment recommendations made to customers be "suitable" for such customer. Specifically, the rule reads as follows:

> In recommending to a customer the purchase, sale or exchange of any security, a member shall have reasonable grounds for believing that the recommendation is suitable for such customer upon the basis of the facts, if any, disclosed by such customer as to his other security holdings and as to his financial situation and needs.

In creating the present system, meeting NASD suitability standards was a significant concern. The system is believed to comply with NASD suitability requirements in regard to individual investors, primarily because the depth of the questions listed in the questionnaire elicits a most accurate picture of the investor's current financial situation, as well as his risk tolerance. Based on the information obtained, the investment recommendations given are believed surely to be suitable for the investor.

While the present specification has described a preferred embodiment of the invention, it will be apparent that many modifications may be made without departing from the spirit and scope of the invention, which is to be determined from the appended claims.

## QUESTIONNAIRE

1. **Age:** __ 18-29 __ 30-44 __ 45-54 __ 55-64 __ 65-75 __ Over 75

2. **A Family status:** __ Single __ Married
**B Number of Children:** __ none __ one __ two to three __ four or more

3. **Employment status:** __ Full-time Employed __ Not Employed
__ Part-time Employed __ Self-Employed __ Retired

4. **Number of Years to Retirement:** __ 0-5 (includes already retired)
__ 6-9 __ 10-14 __ 15 plus

### INVESTMENT PROFILE

5. **Choose the one that best describes your investment philosophy:**
__ I am conservative. I understand that a conservative approach may limit growth of principal in order to reduce risk of loss.
__ I prefer investments that entail an average level of risk to principal in the pursuit of asset growth.
__ I prefer aggressive investments which entail higher than average risk of loss of principal in the pursuit of high asset growth.

6. **To what degree is the main purpose of your investment portfolio to provide current income to cover living and other expenses?**

__ Extremely high __ High __ Moderately high
__ Low __ Inapplicable

7. **It is often possible to receive higher income by taking a greater risk of loss of principal. Given that trade-off, how much risk of losing some of your money are you willing to assume to obtain higher income?**

__ Maximum income/Substantial risk
__ High income/Some risk
__ Moderate income/Reduced risk
__ Reduced income/Minimum risk
__ Not applicable-Income is not an important goal

**8. In order to assist us in determining which types of investments are right for you, including whether tax exempt products would be useful, please provide the following information.**

A Your filing status

_ Single Return _ Joint Return _ Head of Household Return
_ Married Filing Separately Return

B Your annual Federal taxable income of **1991**. This figure appears on your **1991** Federal Tax Return Form 1040 (line 37), Form 1040A (line 22), or Form 1040EZ (line 5). $________ If not readily available, please provide an estimate.

C If you have a substantial amount of annual income that is not taxable, please provide us with an estimate of that amount. (Exclude one-time income sources.) $__________.

D Your estimate of what your Federal taxable income will be in **1992**. **$**______________.

**9. A In what state is your investment income taxed?** ________________
**(This is normally your place of residence.)**

**B Are you a resident of New York City?** _ Yes _ No

**C Are you a resident of Philadelphia?** _ Yes _ No

**D Are you a legal resident of the US?** _ Yes _ No

**10. Assuming you tax bracket warrants it, do you have any reason why certain types of tax exempt investments would not be of use to you (for example, if you have margin loans, or if you are subject to Federal Alternative Minimum Tax)?**_ Yes _ No

**11. What are your approximate net assets (excluding home(s) which you occupy regularly, furnishings, automobiles used by you or family members, etc.)? Include dollar value of assets in checking and savings accounts, CDs, securities (stocks, onds, mutual funds, etc.), and other assets (including real estate) purchased for investment purposes, less any debt owned. (Special note: If the debt on your home exceeds the value of your home, deduct the amount of this excess debt.)**

_ Debt exceeds assets _ $0-$10,000 _ $10,001-$25,000
_ $25,001-$50,000 _ $50,001-$100,000
_ $100,000-$250,000 _ Over $250,000

**12. Is the total amount of the debts that you currently owe excessive enought to make you very vulnerable to adverse changes in market conditions or personal financial circunstances?**

__ Yes __ No

**13. Over the next 5 years, do you expect your annual income to:**

__ Increase substantially __ Increase somewhat __ Remain constant
__ Decrease somewhat __ Decrease substantially

**14. Over the next 5 years, do you expect your annual spending to:**

__ Increase substantially __ Increase somewhat __ Remain constant
__ Decrease somewhat __ Decrease substantially

**15. What portion of your annual income are you able to save for investment purposes?**

__ None __ 1%-3% __ 4%-7% __ 8%-10% __ Over 10%

**16. How much of your investment dollars will you need back to cover various expenses, e.g. college expenses, home purchase, debt payments, general living expenses, or any other purposes, for each of the time periods listed below? (Note: Provide a specific dollar amount for each of the time period. Do not express amount as a percentage or "per year.")**

| Timing | $ Amount |
| --- | --- |
| __ Within 2 years* | $ ________ |
| __ 2 to 5 years | $ ________ |
| __ 5 to 10 years | $ ________ |

* Please include the amount of all debt payable on demand, such as margin debt, as investment dollars needed within two years.

**17. Please provide the dollar amount for the investments you currently have.**

| | Non-Retirement Account $ Amount | Retirement Account (IRA, Koegh, 401k, etc.) $ Amount |
|---|---|---|
| Savings Accourt | ______ | ______ |
| CDS (less than 5 yr maturity) | ______ | ______ |
| CDs (greater than 5 yr maturity) | ______ | ______ |
| Money Market | ______ | ______ |
| Income Funds | ______ | ______ |
| Bonds | ______ | ______ |
| Growth or Equity Funds | ______ | ______ |
| Common Stocks | ______ | ______ |
| Real Estate (Investment Purposes) | ______ | ______ |
| Commodities & Precious Metals | ______ | ______ |
| Collectibles (coins, stamps, etc.) | ______ | ______ |
| Other Income Investments | ______ | ______ |
| Other Growth Investments | ______ | ______ |

**18. To help us evaluate your experience in investing over the last 10 years, and your comfort level with investments of various types, please complete the chart below.**

The amount of experience and knowledge I have in each type of investment **(Check only one box for each type of investment)**:

| | Little or None | Some | A Great Deal |
|---|---|---|---|
| CDs or Savings Accounts | __ | __ | __ |
| Money Market Funds or Instruments | __ | __ | __ |
| Stock or Equity Funds | __ | __ | __ |
| Bonds or Income Funds | __ | __ | __ |
| Options or Futures | __ | __ | __ |

**19. The information I have provided in this questionnaire is a reasonable picture of my financial situation. There are no important facts which would invalidate this picture.** __ Correct __ Incorrect

**Claims**

1. A data processing system for administering a program to allocate financial assets by determining a division of said assets among a plurality of investments, said system comprising:

first memory means for storing investment data defining a plurality of investments;

second memory means for storing category data defining a plurality of investment categories, each investment category corresponding to at least one of said investments;

input means for inputting questionnaire data including an investor's financial asset data, financial goal data and risk tolerance data;

allocation means for allocating said financial assets to a suitable one of said investment categories in dependence on said questionnaire data; and

output means for outputting a report including said suitable investment category and said at least one investment corresponding thereto.

2. A system according to Claim 1, wherein each said investment category includes an identification and a proportional amount of any investment corresponding thereto.

3. A system according to Claim 1, wherein said output means includes means for formatting a letter addressed to the investor that describes said suitable investment category and said at least one investment corresponding thereto, and means for printing said letter.

4. A system according to Claim 1, wherein said questionnaire data includes present financial need data, and wherein said allocation means is responsive to said present financial need data to deduct a dedicated reserve from said financial assets prior to allocation and then to allocate a remainder of said financial assets to a suitable one of said investment categories.

5. A system according to Claim 4, wherein said financial need data includes money data and time of need data, and wherein said allocation means determines said dedicated reserve in response thereto.

6. A system according to Claim 4, wherein said allocation means allocates said dedicated reserve to one of said investments corresponding to said suitable investment category.

7. A system according to Claim 1, wherein said financial asset data includes income data and equity data, said allocation means assigning initial income and equity scores in accordance with said income and equity data, respectively, and then weighting said initial income and equity scores in response to a combination of said income and equity data.

8. A data processing method for administering a program to allocate financial assets by determining a division of said assets among a plurality of investments, said method comprising:

storing in first memory means investment data defining a plurality of investments;

storing in second memory means category data defining a plurality of investment categories, each investment category corresponding to at least one of said investments;

inputting questionnaire data including an investor's financial asset data, financial goal data and risk tolerance data;

allocating said financial assets to a suitable one of said investment categories in dependence on said questionnaire data; and

outputting a report including said suitable investment category and said at least one investment corresponding thereto.

9. A method according to Claim 8, wherein each said investment category includes an identification and a proportional amount of any investment corresponding thereto.

10. A method according to Claim 8, wherein said output step includes formatting a letter addressed to the investor that describes said suitable investment category and said at least one investment corresponding thereto, and printing said letter.

11. A method according to Claim 8, wherein said questionnaire data includes present financial need data and wherein said allocation step is responsive to said present financial need data to deduct a dedicated reserve from said financial assets prior to allocation and then to allocate a remainder of said financial assets to a suitable one of said investment categories.

12. A method according to Claim 11, wherein said financial need data includes money data and time of need data, and wherein said allocation step determines said dedicated reserve in response thereto.

13. A method according to Claim 11, wherein said allocation step allocates said dedicated reserve to one of said investments corresponding to said suitable investment category.

**14.** A method according to Claim 8, wherein said financial asset data includes income data and equity data, said allocation step assigning initial income and equity scores in accordance with said income and equity data, respectively, and then weighting said initial income and equity scores in response to a combination of said income and equity data.

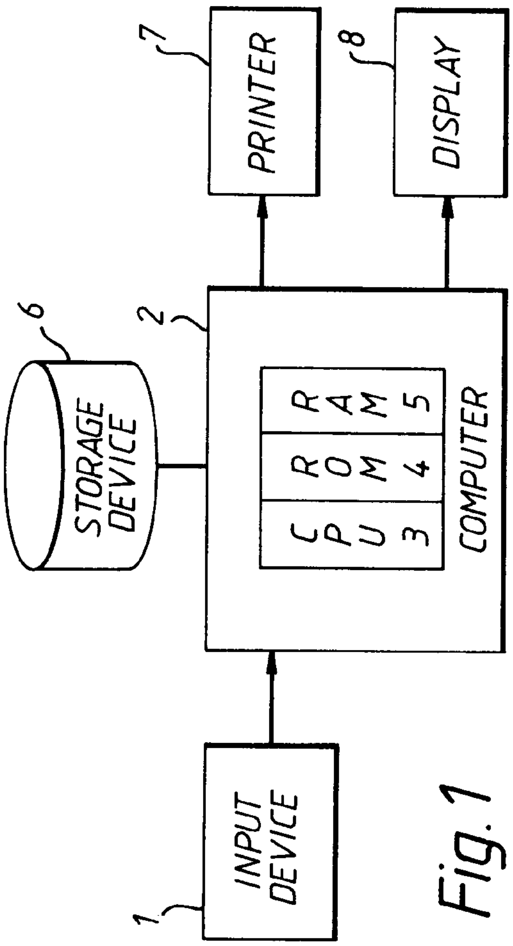
INPUT DEVICE
1
COMPUTER
2
CPU 3
ROM 4
RAM 5
STORAGE DEVICE
6
PRINTER
7
DISPLAY
8

Fig. 1

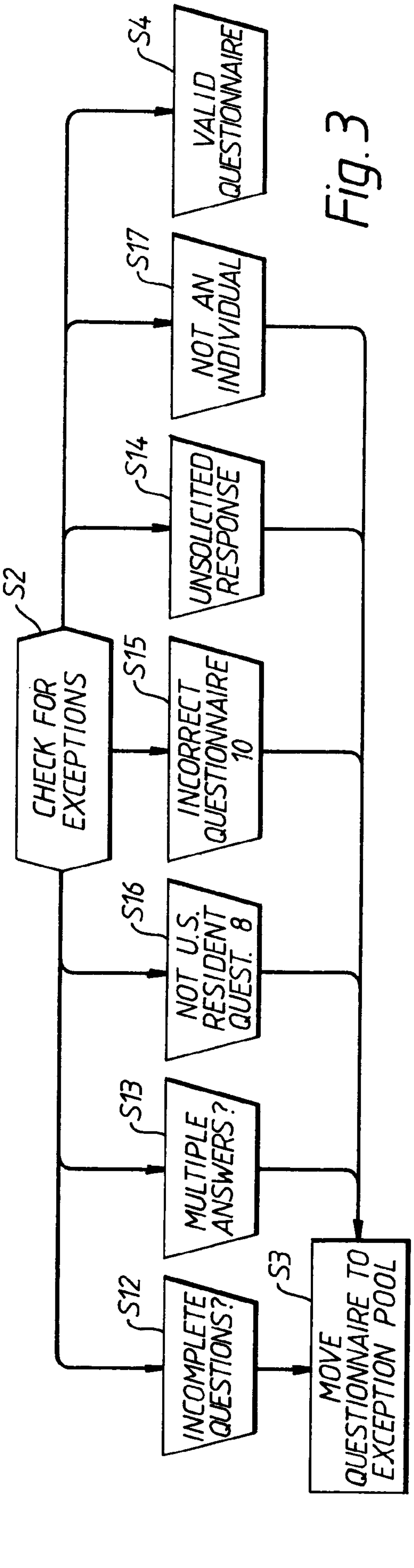
CHECK FOR EXCEPTIONS
S2
INCOMPLETE QUESTIONS?
S12
MULTIPLE ANSWERS?
S13
NOT U.S. RESIDENT QUEST. 8
S16
INCORRECT QUESTIONNAIRE 10
S15
UNSOLICITED RESPONSE
S14
NOT AN INDIVIDUAL
S17
VALID QUESTIONNAIRE
S4
MOVE QUESTIONNAIRE TO EXCEPTION POOL
S3

Fig. 3

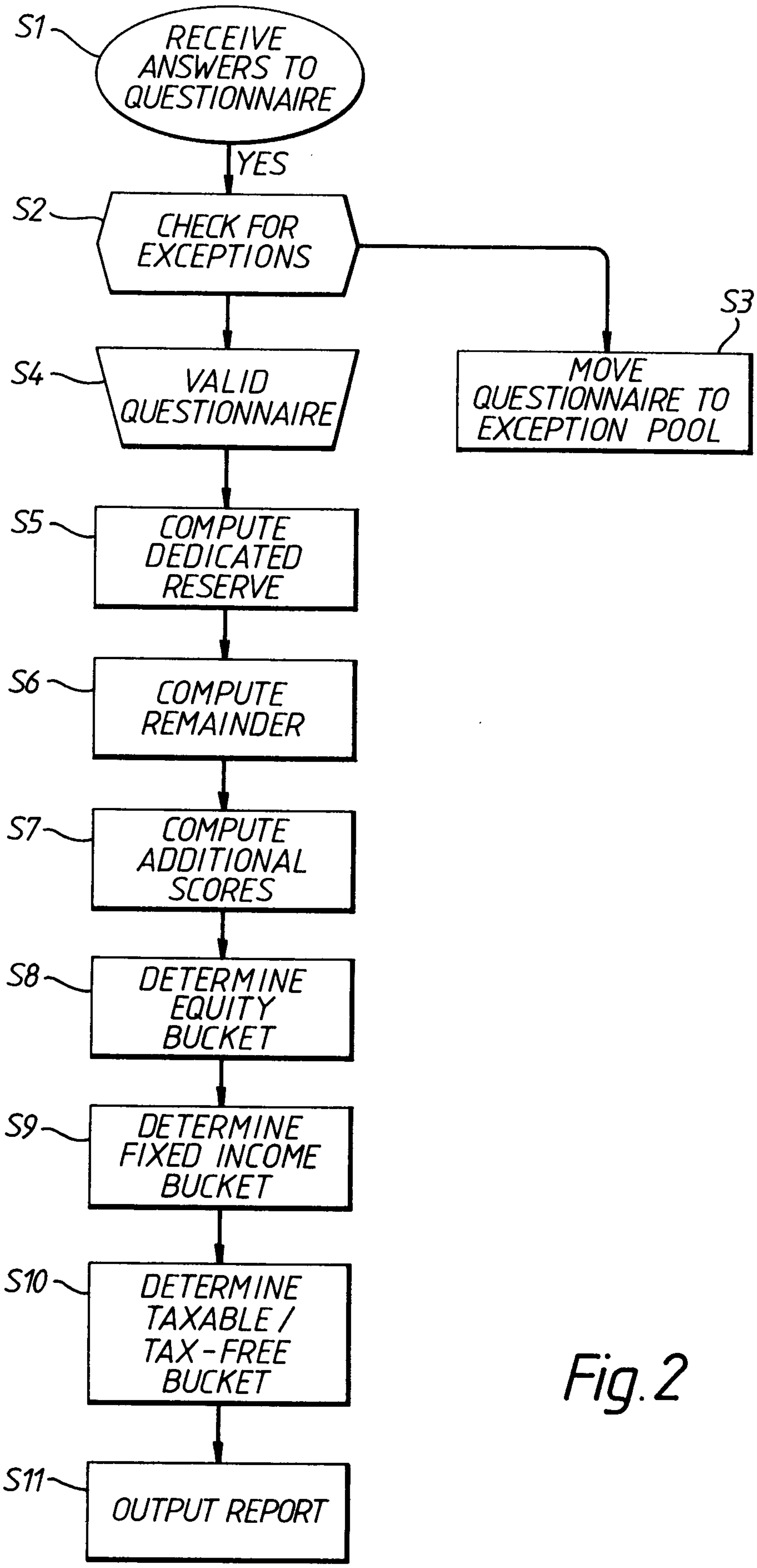
S1
RECEIVE ANSWERS TO QUESTIONNAIRE
YES
S2
CHECK FOR EXCEPTIONS
S3
MOVE QUESTIONNAIRE TO EXCEPTION POOL
S4
VALID QUESTIONNAIRE
S5
COMPUTE DEDICATED RESERVE
S6
COMPUTE REMAINDER
S7
COMPUTE ADDITIONAL SCORES
S8
DETERMINE EQUITY BUCKET
S9
DETERMINE FIXED INCOME BUCKET
S10
DETERMINE TAXABLE / TAX-FREE BUCKET
S11
OUTPUT REPORT

Fig. 2

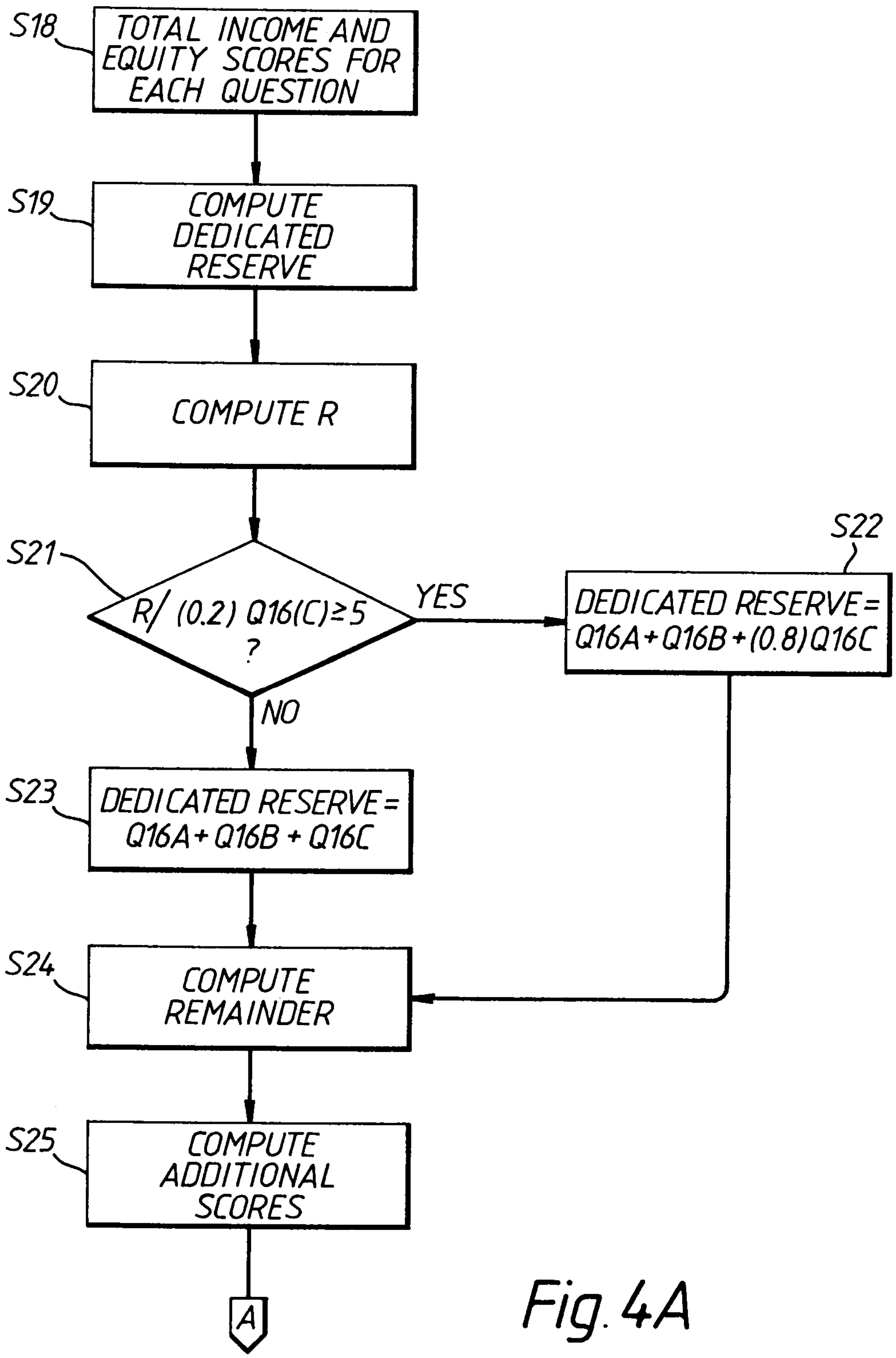
S18
TOTAL INCOME AND EQUITY SCORES FOR EACH QUESTION
S19
COMPUTE DEDICATED RESERVE
S20
COMPUTE R
S21
R/ (0.2) Q16(C)≥5 ?
YES
NO
S22
DEDICATED RESERVE = Q16A + Q16B + (0.8) Q16C
S23
DEDICATED RESERVE = Q16A + Q16B + Q16C
S24
COMPUTE REMAINDER
S25
COMPUTE ADDITIONAL SCORES
A

Fig. 4A

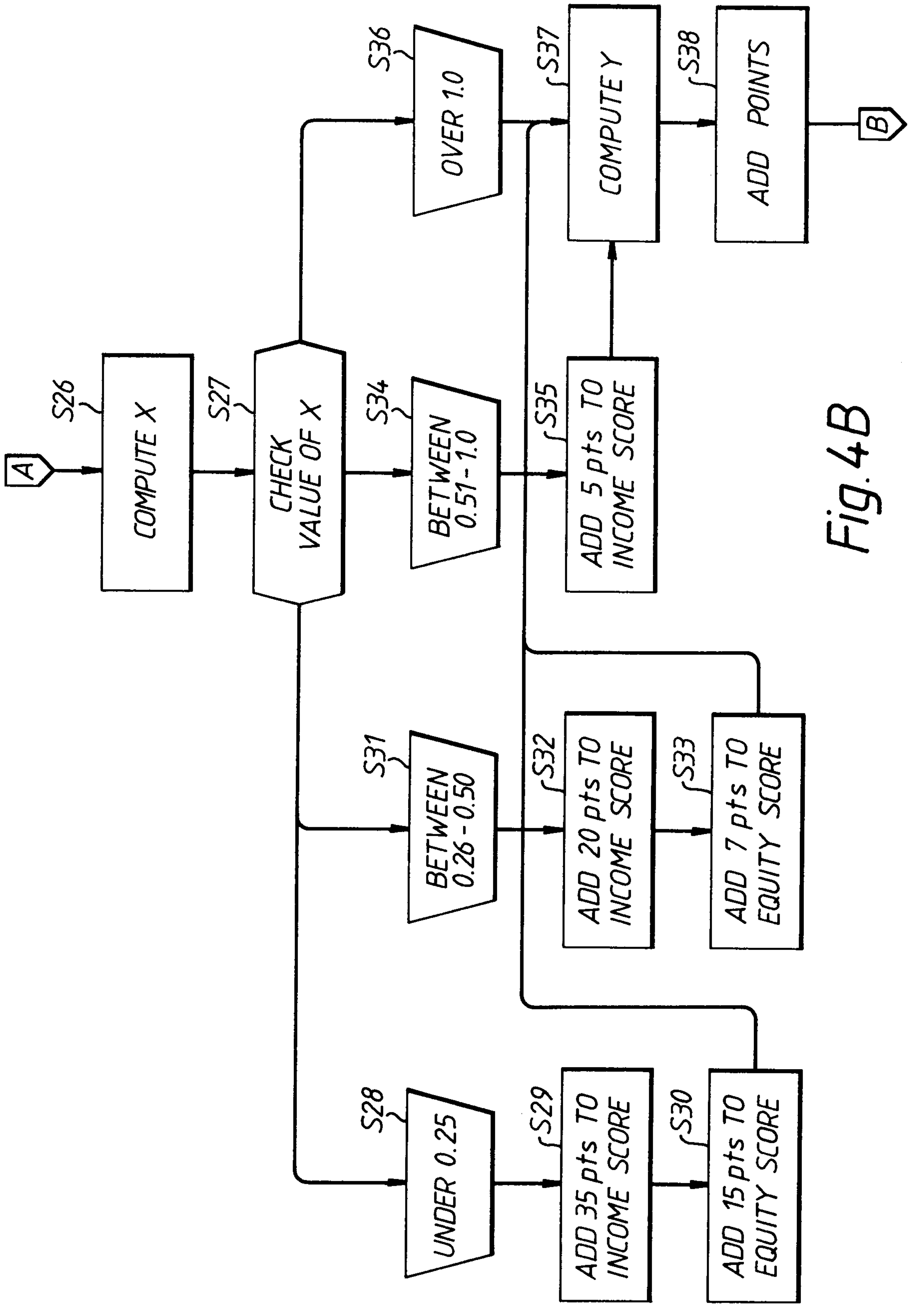
A
S26
COMPUTE X
S27
CHECK VALUE OF X
S28
UNDER 0.25
S29
ADD 35 pts TO INCOME SCORE
S30
ADD 15 pts TO EQUITY SCORE
S31
BETWEEN 0.26 - 0.50
S32
ADD 20 pts TO INCOME SCORE
S33
ADD 7 pts TO EQUITY SCORE
S34
BETWEEN 0.51 - 1.0
S35
ADD 5 pts TO INCOME SCORE
S36
OVER 1.0
S37
COMPUTE Y
S38
ADD POINTS
B

Fig. 4B

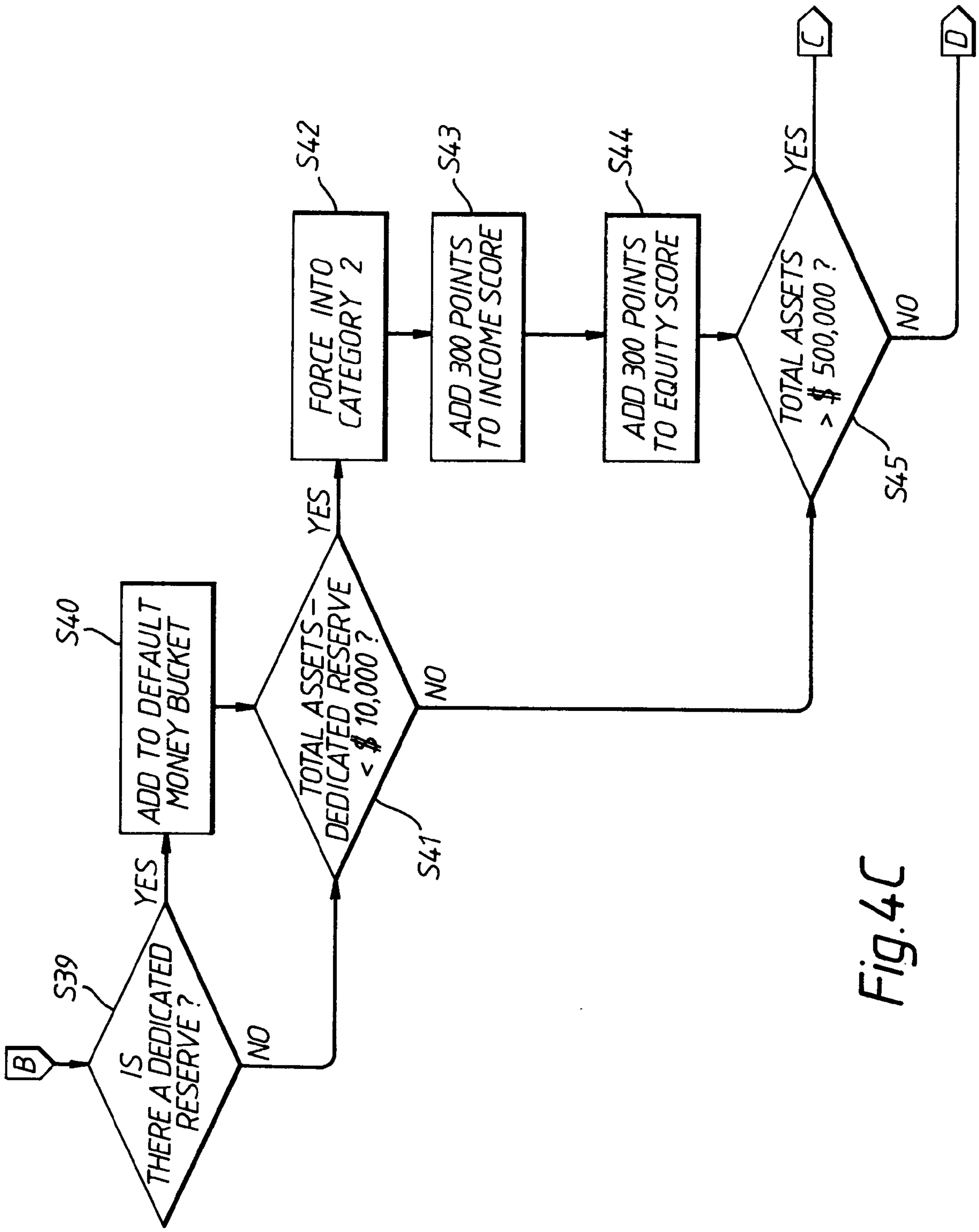
B
IS THERE A DEDICATED RESERVE ?
S39
YES
NO
ADD TO DEFAULT MONEY BUCKET
S40
TOTAL ASSETS – DEDICATED RESERVE < $ 10,000 ?
S41
YES
NO
FORCE INTO CATEGORY 2
S42
ADD 300 POINTS TO INCOME SCORE
S43
ADD 300 POINTS TO EQUITY SCORE
S44
TOTAL ASSETS > $ 500,000 ?
S45
YES
NO
C
D

Fig.4C

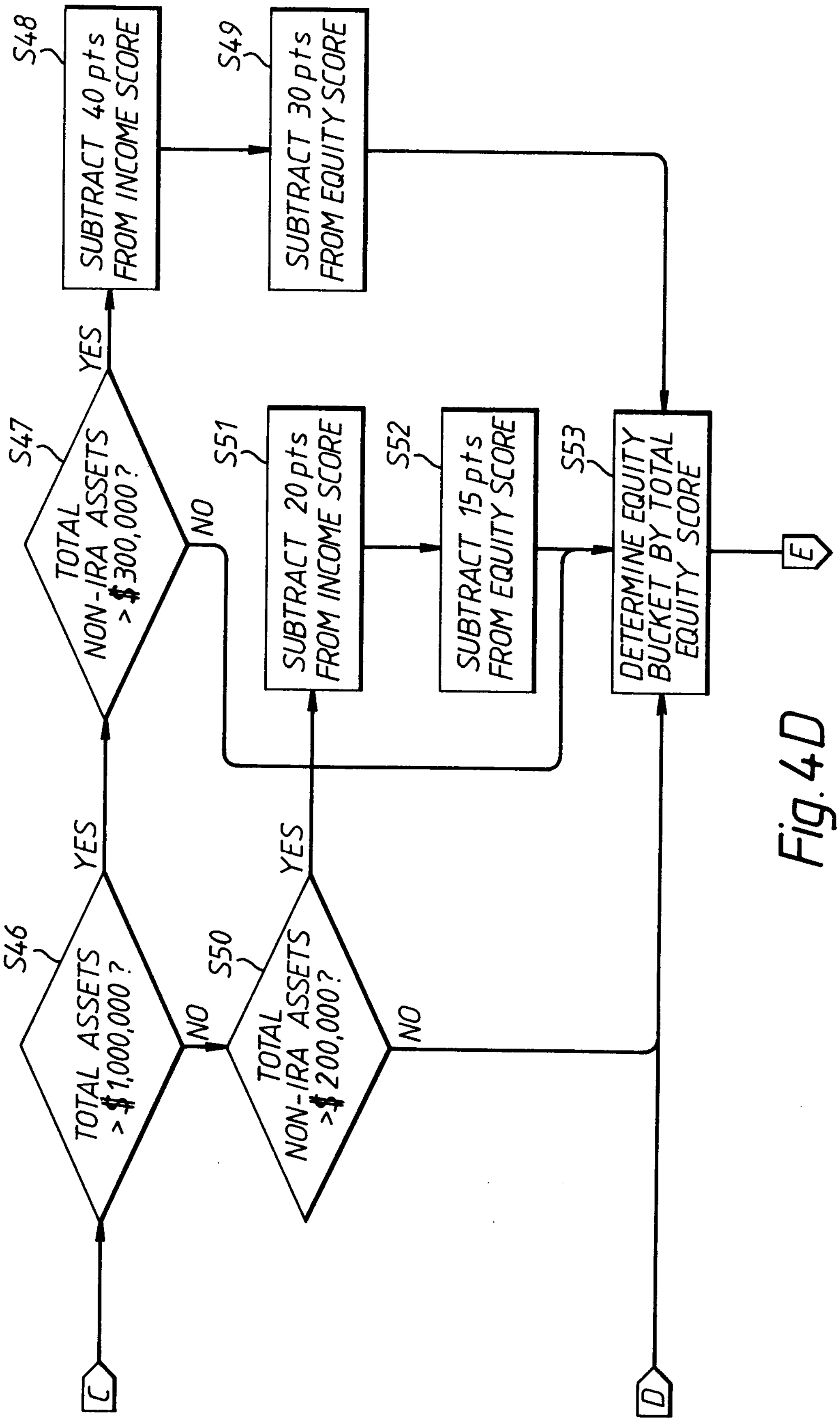
C
S46
TOTAL ASSETS > $1,000,000 ?
YES
NO
S47
TOTAL NON-IRA ASSETS > $300,000?
YES
NO
S48
SUBTRACT 40 pts FROM INCOME SCORE
S49
SUBTRACT 30 pts FROM EQUITY SCORE
S50
TOTAL NON-IRA ASSETS > $200,000?
YES
NO
S51
SUBTRACT 20 pts FROM INCOME SCORE
S52
SUBTRACT 15 pts FROM EQUITY SCORE
S53
DETERMINE EQUITY BUCKET BY TOTAL EQUITY SCORE
D
E

Fig. 4D

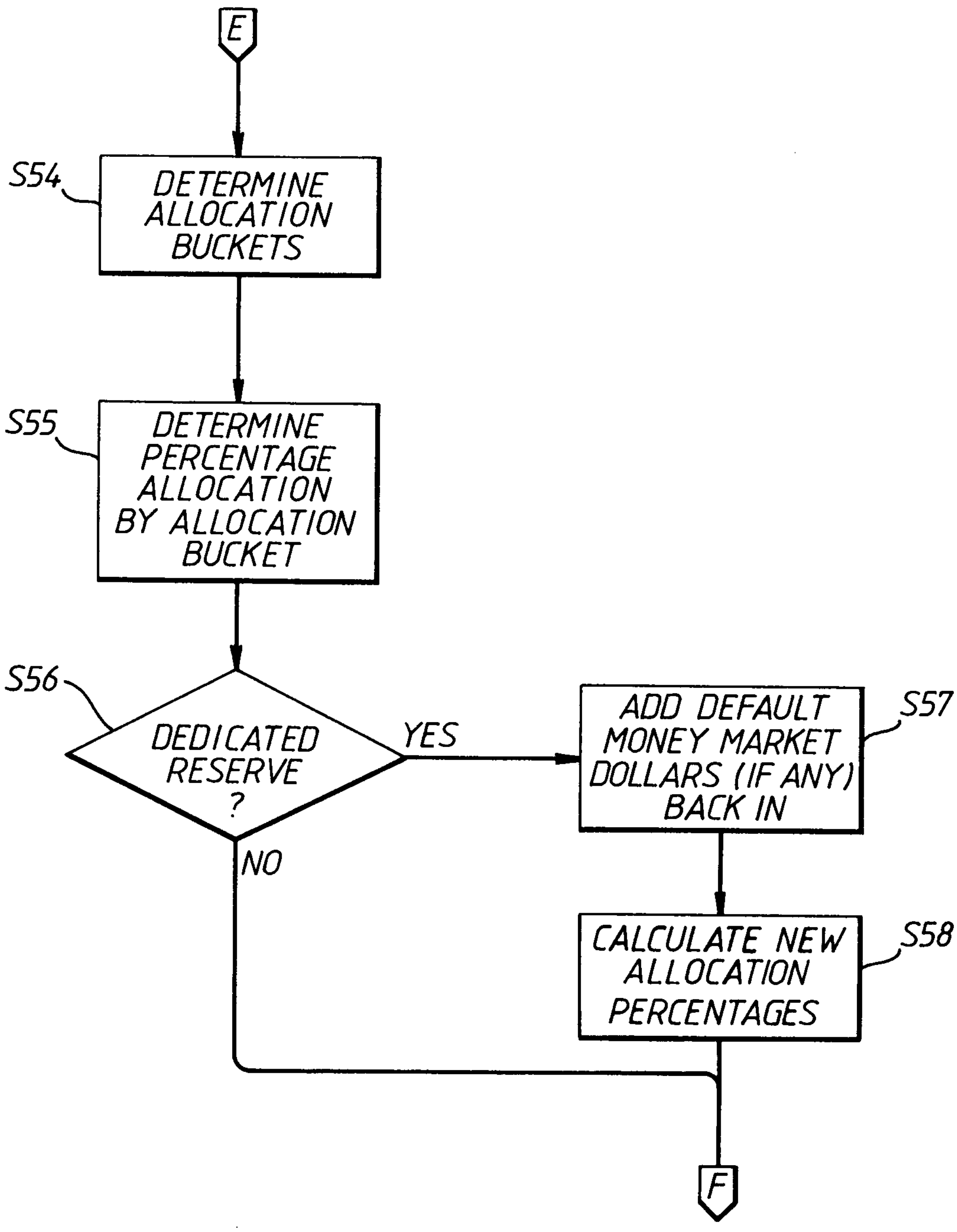
E
S54
DETERMINE ALLOCATION BUCKETS
S55
DETERMINE PERCENTAGE ALLOCATION BY ALLOCATION BUCKET
S56
DEDICATED RESERVE ?
YES
NO
ADD DEFAULT MONEY MARKET DOLLARS (IF ANY) BACK IN
S57
CALCULATE NEW ALLOCATION PERCENTAGES
S58
F

Fig. 4E

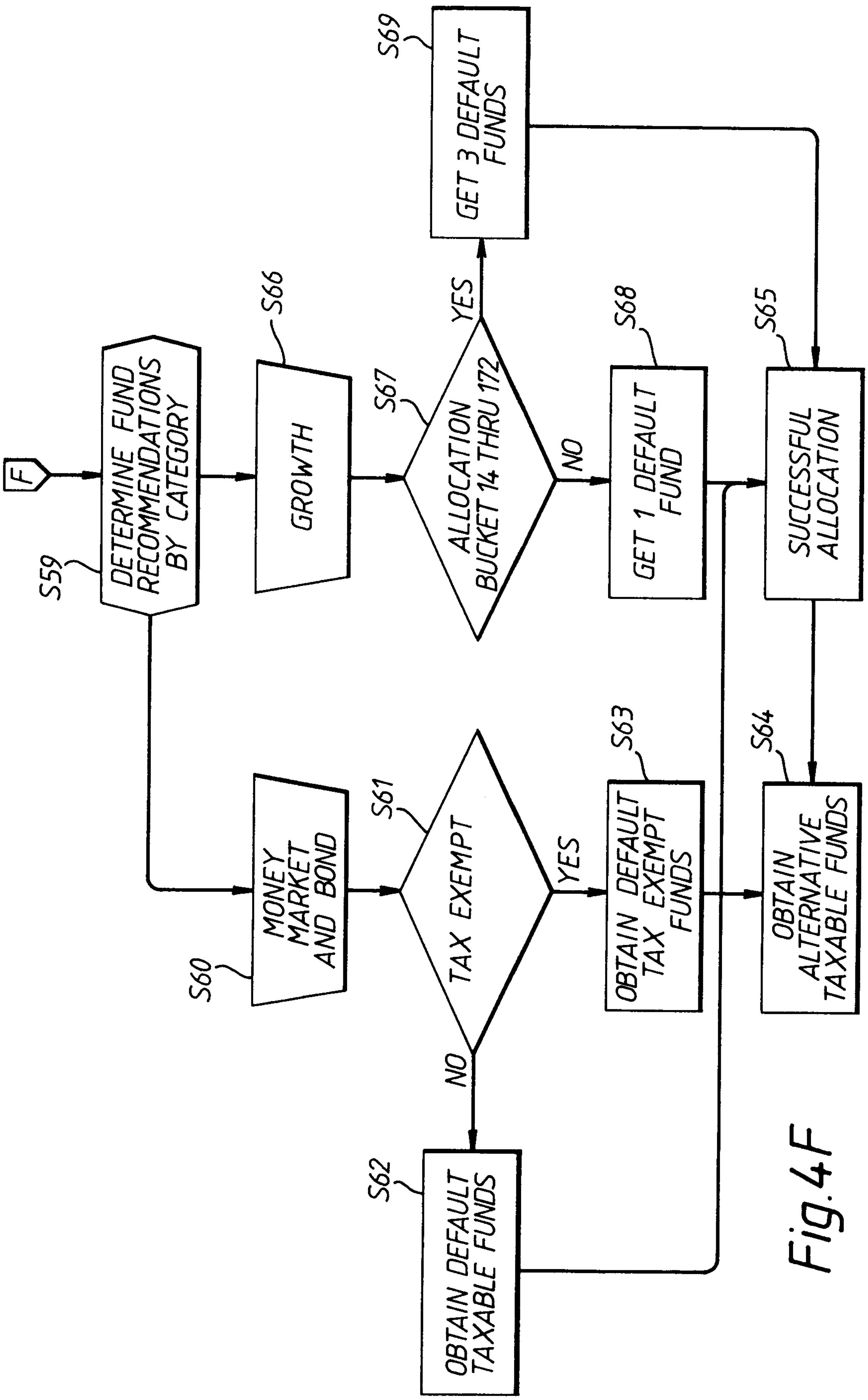
F
S59
DETERMINE FUND RECOMMENDATIONS BY CATEGORY
S66
GROWTH
S67
ALLOCATION BUCKET 14 THRU 172
YES
NO
S69
GET 3 DEFAULT FUNDS
S68
GET 1 DEFAULT FUND
S65
SUCCESSFUL ALLOCATION
S60
MONEY MARKET AND BOND
S61
TAX EXEMPT
YES
NO
S63
OBTAIN DEFAULT TAX EXEMPT FUNDS
S64
OBTAIN ALTERNATIVE TAXABLE FUNDS
S62
OBTAIN DEFAULT TAXABLE FUNDS

Fig.4F

European Patent Office

# EUROPEAN SEARCH REPORT

Application Number

EP 93 30 4197
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EXPERT SYSTEMS. vol. 5, no. 2, May 1988, OXFORD, GB pages 78 - 100 B. HUMPERT AND P. HOLLEY 'Expert systems in finance planning' * page 79, right column, line 17 - line 43 * * page 80, left column, line 8 - line 41 * | 1-14 | G06F15/30 |
| Y | COMPUTERS IN BANKING vol. 6, no. 8, August 1989, pages 21 - 22 J.T. MONK AND K.M. LANDIS 'Program Offers Portfolio Management Basics' * page 21, middle column, line 17 - line 26 * * page 22, middle column, line 33 - line 38 * | 1-14 | |
| A | WALL STREET COMPUTER REVIEW vol. 5, no. 2, November 1987, US pages 8 - 12 V. KULKOSKY 'Key to broker's growth found in his notebook' * page 8, left column, line 38 - line 47 * | 1-14 | TECHNICAL FIELDS SEARCHED (Int. Cl.5 ) G06F |
| A | WALL STREET COMPUTER REVIEW vol. 5, no. 4, January 1988, US pages 8 - 12 I. SCHMERKEN 'Making risk analysis easy as ALPHA, BETA' * page 10, left column, line 26 - line 40 * * page 12, middle column, line 39 - line 46 * | 1-14 | |

-/--

The present search report has been drawn up for all claims

| Place of search | Date of completion of the search | Examiner |
|---|---|---|
| THE HAGUE | 28 SEPTEMBER 1993 | BURÖ S.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

European Patent Office

# EUROPEAN SEARCH REPORT

Application Number

EP 93 30 4197
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-8 808 163 (PROPRIETARY FINANCIAL PRODUCTS)<br>20 October 1988<br>* page 2, line 22 - line 32 *<br>--- | 1-14 | |
| A | EP-A-0 434 877 (PAXLEA)<br>3 July 1991<br>* column 4, line 15 - line 25 *<br>* column 6, line 18 - line 32 *<br>----- | 1-14 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 28 SEPTEMBER 1993 | BURÖ S.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)